# EUROPÄISCHE PATENTSCHRIFT

(11) **EP 0 843 624 B1**
(45) Veröffentlichungstag und Bekanntmachung des Hinweises auf die Patenterteilung: **26.04.2000**
(21) Anmeldenummer: 97929312.3
(22) Anmeldetag: 02.07.1997
(51) Int. Cl.: B60K 15/035, B60K 15/04

(54) **MEHRFUNKTIONSVENTIL FÜR EINEN KRAFTSTOFFTANK-EINFÜLLSTUTZEN**
MULTIPURPOSE VALVE FOR A FUEL TANK FILLER NECK
SOUPAPE A PLUSIEURS FONCTIONS POUR TUBULURE DE REMPLISSAGE DE RESERVOIR DE CARBURANT

(30) Priorität: 03.07.1996 AT 398969
(43) Veröffentlichungstag der Anmeldung: 27.05.1998
(73) Patentinhaber: BLAU International Gesellschaft m.b.H., 8160 Preding (AT)
(72) Erfinder: TEREFENKO, Jan, Etobicoke, Ontario M8Y 2N8 (CA)
(74) Vertreter: Weiser, Andreas, Dipl.-Ing.
(86) Internationale Anmeldenummer: EP9703444
(87) Internationale Veröffentlichungsnummer: WO9801316

(56) Entgegenhaltungen:
- DE-A- 4 343 498
- US-A- 5 215 132

## Beschreibung

Die vorliegende Erfindung betrifft ein Mehrfunktionsventil für einen Kraftstofftank-Einfüllstutzen, das zumindest einen die Ventilfunktionen bestimmenden, von einem in den Einfüllstutzen ragenden Stößel betätigten Ventilteller aufweist und durch Einführen einer Zapfpistole in den Einfüllstutzen von einer federbelasteten Ruhestellung, in welcher eine von einem Gasauffangraum des Kraftstofftankes ausgehende Überfülleitung mit einer insbesondere zu einem Kraftstoffdampf-Auffangbehälter führenden Abzugleitung verbunden ist, in eine Tankstellung betätigbar ist, in der eine vom Einfüllstutzen und/oder Kraftstofftank ausgehende Entlüftungsleitung mit der Abzugleitung verbunden und die Überfülleitung verschlossen ist.

Ein derartiges Ventil ist in der DE 43 43 498 beschrieben. Bei diesem bekannten Ventil befindet sich die Mündung der Überfülleitung axial in einem Abstand von der dem Stößel abgewandten Seite des Ventiltellers (bzw. eines aufgesetzten Zweittellers) und wird somit von letzterem in der Tankstellung, wenn der Ventilteller aus seinem Ruhesitz gehoben ist, in Axialrichtung verschlossen. Für die Gewährleistung einer korrekten Überfüll-Verhinderungsfunktion ist es daher erforderlich, daß einerseits die genannte Seite des Ventiltellers vollständig an der Mündung der Überfülleitung zur Anlage kommt, d.h. der Ventilstößel bis zum Anschlag betätigt wird, und anderseits auch auf dieser Seite des Ventiltellers eine Dichtung vorgesehen wird.

Die Erfindung setzt sich zum Ziel, ein Mehrfunktionsventil der genannten Art zu schaffen, welches einfacher aufgebaut ist als die bekannten Konstruktionen und in der Tankstellung eine korrekte Abdichtung der Überfülleitung unter allen Betriebsbedingungen gewährleistet. Dieses Ziel wird gemäß der Erfindung dadurch erreicht, daß die Überfülleitung in der Tankstellung durch den Umfangsrand des Ventiltellers schiebeventilartig verschlossen ist.

Die erfindungsgemäße Schiebeventilabdichtung der Überfülleitung erübrigt eine gesonderte Dichtung und ist in bestimmten Grenzen unempfindlich gegenüber variierenden Axialstellungen des Stößels und damit unterschiedlichen Einführstellungen der Zapfpistole. Das erfindungsgemäße Mehrfunktionsventil bietet bei vereinfachtem Aufbau wesentlich erhöhte Betriebssicherheit.

Eine besonders vorteilhafte Ausführungsform der Erfindung zeichnet sich dadurch aus, daß der Umfangsabschnitt des Ventiltellers zur Bildung eines verbreiterten Umfangsrandes axialparallel umgeschlagen ist.

Eine besonders kompakte und betriebssichere Konstruktionsvariante der Erfindung besteht darin, daß der Ventilteller über seinen gesamten Umfang im Ventilgehäuse gleitend geführt ist und zwischen seinem die Überfülleitung schiebeventilartig steuernden Umfangsrand und dem die Entlüftungsleitung steuernden Ventilspalt mit Durchtrittsöffnungen versehen ist.

Die Erfindung wird nachstehend an Hand eines in den Zeichnungen dargestellten Ausführungsbeispieles näher erläutert.
Fig. 1 zeigt das Mehrfunktionsventil in Verbindung mit einem Einfüllstutzen im Axialschnitt,
Fig. 2 das Mehrfunktionsventil in einem vergrößerten Ausschnitt von Fig. 1 in der Ruhestellung (Fahrbetrieb) und
Fig. 3 in gleicher Darstellungsart in der Tankstellung.

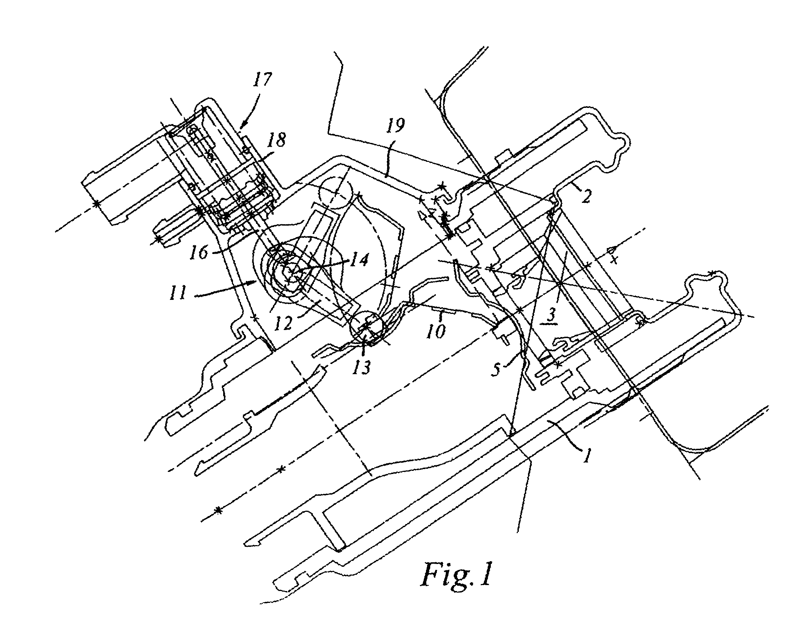

Gemäß Fig. 1 ist in das obere Ende eines Einfüllstutzens 1 ein topfförmiger Einsatz 2 dicht eingesetzt, welcher an seinem unteren Ende eine Öffnung 3 verringerten Durchmessers für den Durchtritt des Füllrohres einer (nicht dargestellten) Zapfpistole aufweist. Die Öffnung 3 ist mit Hilfe einer einseitig angelenkten, federbelasteten Klappe 5 verschließbar. Zum dichten Verschließen der Öffnung 3 im Fahrbetrieb ist neben der Klappe 5 ein Anpreßfinger 10 angelenkt, welcher mit Hilfe einer Betätigungseinrichtung 11 gegen die Unterseite der Klappe 5 beaufschlagbar ist. Der Anpreßfinger 10 ist ein zweiarmiger Hebel, und die Betätigungseinrichtung 11 umfaßt einen verschwenkbaren, an seinem Ende mit einer federbelasteten Andruckrolle 13 versehenen Nocken 12, welcher auf den einen Hebelarm des Anpreßfingers 10 drückt und dessen anderen Hebelarm gegen die Unterseite der Klappe 5 preßt. Das Verschwenken des Nockens 13 erfolgt über eine Welle 14, die von einem geeigneten (nicht dargestellten) Servomotor angetrieben wird. Auch eine Handbetätigung ist möglich.

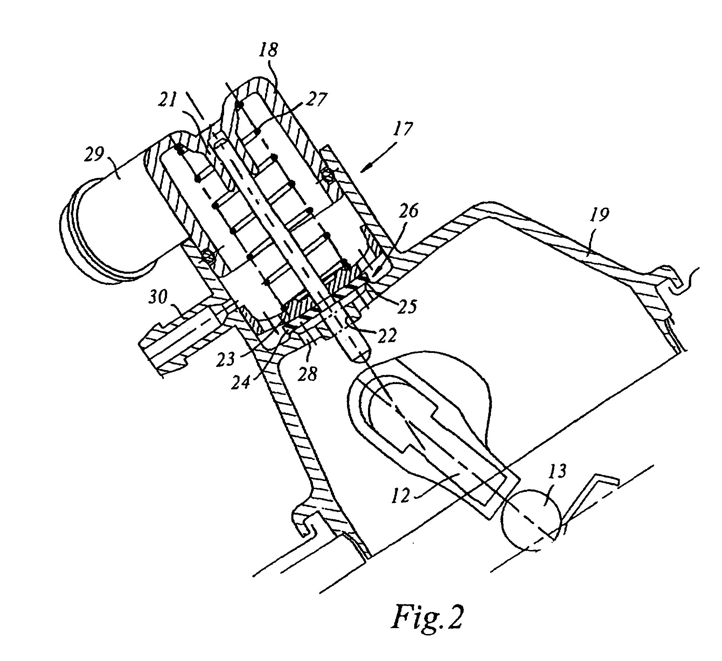

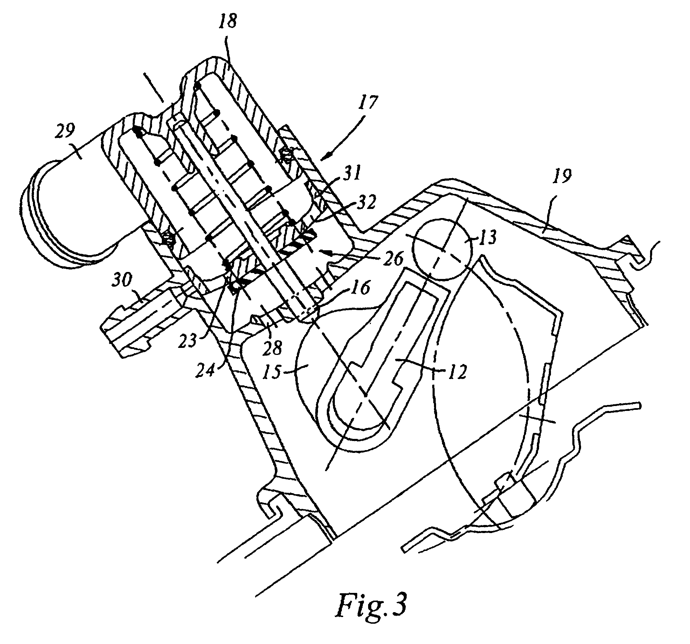

Auf der Welle 14 ist ein Steuernocken 15 fest verkeilt, dessen Umfang eine Steuerkurve für einen als Nockenabtaster wirkenden Stößel 16 eines Mehrfunktionsventiles 17 bildet, welches unter Bezugnahme auf die Fig. 2 und 3 nachstehend beschrieben wird.

Das Mehrfunktionsventil 17 besitzt ein im wesentlichen zylindrisches Gehäuse 18, das seitlich an einem Gehäuse 19 der Betätigungseinrichtung 11 ansetzt, welches seinerseits seitlich am Einfüllstutzen 1 angebracht ist. Der Stößel 16 ist im Gehäuse 18 axial geführt, u.zw. gleitet er mit einem Ende in einer Buchse 21, welche an dem der Betätigungseinrichtung 11 abgewandten Ende des Gehäuses 18 innenseitig ausgeformt ist, und durchsetzt mit seinem anderen Ende gleitend eine Öffnung 22 in der gegenüberliegenden Stirnseite des Gehäuses 18.

Der Stößel 16 trägt einen starren Ventilteller 23, welcher unter Zwischenschaltung einer Dichtungsscheibe 24 mit einer Ringschulter 25, die auf der der Betätigungseinrichtung 11 zugewandten Stirnseite des Gehäuses 18 angeordnet ist, einen Ventilspalt 26 bildet. Der Ventilteller 23 ist mit Hilfe einer angedeuteten Druckfeder 27 in die Schließstellung (Fig. 1) vorgespannt.

Der Ventilteller 23 steuert drei in das Gehäuse 18 einmündende Leitungen. Die erste Leitung wird durch Bohrungen 28 in der der Betätigungseinrichtung 11 zugewandten Stirnseite des Gehäuses 18 gebildet, welche über das Gehäuse 19 mit dem Inneren des Einfüllstutzens 1 in Verbindung stehen und eine Entlüftungsleitung für den Einfüllstutzen 1 bilden. Auf der gegenüberliegenden Seite des Ventilspaltes 26 mündet eine zu einem Kraftstoffdampf-Auffangbehälter (nicht gezeigt) führende großdurchmeßrige Abzugleitung 29 in das Gehäuse 18. Der Auffangbehälter ist mit einem Aktivkohlefilter zur Absorption von Kraftstoffdämpfen ausgestattet und wird während des Fahrzeugbetriebes von Verbrennungszufuhrgasen durchspült, welche die Kraftstoffrückstände aus dem Aktivkohlefilter wieder herauslösen und der Verbrennung zuführen. Die Komponenten und die Funktionsweise dieses Systems sind dem Fachmann bekannt.

Bei Fahrzeugen, welche nicht mit einem derartigen Kraftstoffdampf-Auffangsystem ausgestattet sind, mündet die Abzugleitung 29 direkt ins Freie.

Auf derselben Seite des Ventilspaltes 26, auf der sich die Abzugleitung 29 befindet, mündet auch eine Überfülleitung 30 seitlich in das Gehäuse 18. Die Überfülleitung 30 geht von einem an der obersten Stelle des Kraftstofftankes liegenden Gasauffangraum (nicht dargestellt) aus. Die Funktion einer solchen Überfülleitung ist dem Fachmann bekannt; das Schließen während des Tankvorganges verhindert eine Entlüftung und damit Füllung des Gasauffangraumes im Fahrzeugtank. Nach dem Tankvorgang wird die Überfülleitung geöffnet, wodurch nun allfälliger Kraftstoffüberschuß, der im Einfüllstutzen stehengeblieben ist, unter Anfüllung des Gasauffangraumes in den Tank nachrinnt. Während des Fahrens (Ruhestellung) dient die geöffnete Überfülleitung als Druckentlastungsleitung für den Tank.

Der Ventilspalt 26 wirkt in der Ruhestellung zusätzlich als Sicherheitsventil. Wenn der Druck im Tank so groß wird, daß er über die kleindurchmeßrige Überfülleitung 30 nicht mehr abgebaut werden kann, öffnet der Ventilspalt 26 gegen die Kraft der Feder 27 und läßt den Überdruck über die Entlüftungsleitung 28 zum Auffangbehälter entweichen.

Die Überfülleitung 30 wird durch den Umfangsrand 31 des Ventiltellers 23 gesteuert. Der Umfangsrand 31 verschließt in der Offenstellung des Ventilspaltes 26 die Überfülleitung schiebeventilartig und ist zu diesem Zweck verbreitert ausgeführt, u.zw. im dargestellten Fall durch axialparalleles Umschlagen des Umfangsrandes.

Im dargestellten Fall liegt der Umfangsrand 31 nicht nur am Ort der Überfülleitung 30, sondern am gesamten Innenumfang des Gehäuses 18 an, so daß Durchtrittsbohrungen 32 im Ventilteller 23 radial außerhalb des Ventilspaltes 26 vorgesehen werden müssen, um die Verbindung zwischen Entlüftungsleitung 28 und Abzugleitung 29 in der Tankstellung (Fig. 3) herzustellen. Dies gilt auch, wenn die Abzugleitung 29 dem Ventilspalt 26 näher liegt als die Überfülleitung 30, um die Verbindung zwischen Überfülleitung 30 und Abzugleitung 29 in der Ruhestellung (Fig. 2) zu gewährleisten. Wenn der Umfangsrand 31 nur im Bereich der Überfülleitung 30 an der Innenseite des Gehäuses 18 anliegt, können die Durchschnittsbohrungen 32 entfallen.

Die axiale Länge des die Überfülleitung 30 verschließenden Umfangsrandes 31 ist merklich größer als die Axialerstreckung der Mündung der Überfülleitung 30, so daß es auf eine exakte Axialpositionierung des Ventiltellers 23 in der Tankstellung (Fig. 3) nicht ankommt.

Das dargestellte Ausführungsbeispiel kann in jeder beliebigen, dem Fachmann ersichtlichen Weise abgewandelt werden. Beispielsweise kann die Entlüftungsleitung 28 durch eine gesonderte, von der Oberseite des Tankes ausgehende Leitung gebildet werden. Wie beschrieben, kann die Abzugleitung 29 (bei entsprechender axialer Verlagerung des Umfangsrandes 31) auch zwischen Überfülleitung 30 und Ventilspalt 26 angeordnet werden. Darüber hinaus kann der Stößel 16 auch direkt von der Klappe 5 betätigt werden, wenn keine Anpreßeinrichtung 10 bzw. Betätigungseinrichtung 11 vorhanden sind, oder sogar direkt von der Zapfpistole selbst.

## Patentansprüche

1. Mehrfunktionsventil für einen Kraftstofftank-Einfüllstutzen, das zumindest einen die Ventilfunktionen bestimmenden, von einem in den Einfüllstutzen (1) ragenden Stößel (16) betätigten Ventilteller (23) aufweist und durch Einführen einer Zapfpistole in den Einfüllstutzen (1) von einer federbelasteten Ruhestellung, in welcher eine von einem Gasauffangraum des Kraftstofftankes ausgehende Überfülleitung (30) mit einer insbesondere zu einem Kraftstoffdampf-Auffangbehälter führenden Abzugleitung (29) verbunden ist, in eine Tankstellung betätigbar ist, in der eine vom Einfüllstutzen (1) und/oder Kraftstofftank ausgehende Entlüftungsleitung (28) mit der Abzugleitung (29) verbunden und die Überfülleitung (30) verschlossen ist, dadurch gekennzeichnet, daß die Überfülleitung (30) in der Tankstellung durch den Umfangsrand (31) des Ventiltellers (23) schiebeventilartig verschlossen ist.

2. Mehrfunktionsventil nach Anspruch 1, dadurch gekennzeichnet, daß der Umfangsabschnitt des Ventiltellers (23) zur Bildung eines verbreiterten Umfangsrandes (31) axialparallel umgeschlagen ist.

3. Mehrfunktionsventil nach Anspruch 1 oder 2, dadurch gekennzeichnet, daß der Ventilteller (23) über seinen gesamten Umfang im Ventilgehäuse (18) gleitend geführt ist und zwischen seinem die Überfülleitung (30) schiebeventilartig steuernden Umfangsrand (31) und dem die Entlüftungsleitung (28) steuernden Ventilspalt (26) mit Durchtrittsöffnungen (32) versehen ist.

## Claims

1. Multi-function valve for the filler neck of a fuel tank which comprises at least one valve disc (23) determining the valve functions and actuated by a tappet (16) projecting into the filler neck (1) and which can be moved from a spring-loaded rest position, in which an overfill line (30) departing from a gas-receiving space of the fuel tank is connected to a discharge line (29) leading, in particular, to a fuel vapour receiver, into a fuelling position, in which a venting line (28) departing from the filler neck (1) and/or the fuel tank is connected to the discharge line (29) and the overfill line is closed, by introducing a fuel pump nozzle into the filler neck (1), characterised in that the overfill line (30) is closed in the manner of a slide valve in the fuelling position by the circumferential edge (31) of the valve disc (23).

2. Multi-function valve according to claim 1, characterised in that the circumferential portion of the valve disc (23) is folded over in an axially parallel manner in order to form a broadened circumferential edge (31).

3. Multi-function valve according to claim 1 or claim 2, characterised in that the valve disc (23) is slidably guided in the valve housing (18) via its entire circumference and is provided with through openings (32) between its circumferential edge (31) controlling the overfill line (30) in the manner of a slide valve and the valve gap (26) controlling the venting line (28).

## Revendications

1. Soupape à fonctions multiples pour une tubulure de remplissage d'un réservoir de carburant, laquelle présente au moins une tête de soupape (23) déterminant les fonctions de la soupape, actionnée par un poussoir (16) faisant saillie jusque dans la tubulure de remplissage (1) et laquelle est susceptible, en introduisant un pistolet distributeur dans la tubulure de remplissage (1), d'être actionnée depuis une position de repos sous l'action d'un ressort, dans laquelle une conduite de trop-plein (30) partant d'une chambre de captage de gaz du réservoir de carburant est reliée à une conduite d'évacuation (29) menant en particulier à un réservoir de captage de vapeur de carburant, jusque dans une position de prise de carburant dans laquelle une conduite de mise à l'air (28) partant de la tubulure de remplissage (1) et/ou du réservoir de carburant est reliée avec la conduite d'évacuation (28) et la conduite de trop-plein (30) est fermée, caractérisée en ce que la conduite de trop-plein (30) est fermée dans la position de prise de carburant par le bord périphérique (31) de la tête de soupape (23), à la manière d'une soupape à tiroir.

2. Soupape à fonctions multiples selon la revendication 1, caractérisée en ce que le tronçon périphérique de la tête de soupape (23) est rabattu parallèlement à l'axe pour former un bord périphérique (31) élargi.

3. Soupape à fonctions multiples selon l'une ou l'autre des revendications 1 et 2, caractérisée en ce que la tête de soupape (23) est guidée à coulissement sur toute sa périphérie dans le carter de soupape (18) et est pourvue d'ouvertures de passage (32) entre son bord périphérique (31) commandant la conduite de trop-plein (30) à la manière d'une soupape à tiroir et la fente de soupape (26) commandant la conduite de mise à l'air (28).
